# EUROPÄISCHE PATENTSCHRIFT

(11) **EP 3 748 083 B1**
(45) Veröffentlichungstag und Bekanntmachung des Hinweises auf die Patenterteilung: **26.11.2025**
(21) Anmeldenummer: 20178072.3
(22) Anmeldetag: 03.06.2020
(51) Int. Cl.: E01C 19/20, B60P 1/56, B60P 3/22, E01C 21/00, E02D 3/12

(54) **SILOFAHRZEUG, ARBEITSZUG SOWIE VERFAHREN ZUM FÖRDERN VON BINDEMITTEL FÜR EINEN ARBEITSZUG**
SILO VEHICLE, WORK TRAIN AND METHOD FOR CONVEYING BINDERS FOR A WORK TRAIN
VÉHICULE SILO, TRAIN DE TRAVAUX AINSI QUE PROCÉDÉ DE TRANSPORT DE LIANTS POUR UN TRAIN DE TRAVAUX

(30) Priorität: 05.06.2019 DE 102019115196
(43) Veröffentlichungstag der Anmeldung: 09.12.2020
(73) Patentinhaber: Wirtgen GmbH, 53578 Windhagen (DE)
(72) Erfinder: Frederic, Hess, 56410 Montabaur (DE); Menzenbach, Christoph, 53577 Neustadt (Wied) (DE); Schiefer, Patrick, 53773 Hennef (DE)
(74) Vertreter: dompatent

(56) Entgegenhaltungen:
- EP-A1- 1 557 376
- DE-A1- 2 939 648
- DE-C2- 2 822 052
- US-A- 1 864 612
- US-A- 5 096 336
- US-A1- 2012 321 421

## Beschreibung

Die Erfindung betrifft ein Silofahrzeug zur Bereitstellung von Bindemitteln zur Bodenstabilisierung für eine Streueinrichtung. Ferner betrifft die Erfindung einen Arbeitszug zur Bearbeitung von Böden mit einer selbstfahrenden Bodenbearbeitungsmaschine sowie einem Silofahrzeug. Des Weiteren betrifft die Erfindung ein Verfahren zum Fördern von Bindemittel für einen Arbeitszug, mit einer selbstfahrenden Bodenbearbeitungsmaschine sowie einem Silofahrzeug.

Mit Hilfe von insbesondere pulverförmigem Bindemittel, wie bspw. Kalk oder Zement, kann ein Verbessern bzw. Verfestigen von Böden erfolgen. Hierzu wird das Bindemittel in den Boden eingebracht, um insbesondere dessen Tragfähigkeit zu erhöhen. Eine Bodenstabilisierung erfolgt insbesondere beim Bau von Straßen oder Schienenwegen, sowie beim Bau von Industrieflächen.

Zum Ausbringen von Bindemittel, sind Bindemittelstreuer bekannt. Derartige Fahrzeuge weisen einen großen Behälter zur Aufnahme von Bindemittel auf. Das Ausbringen von Bindemittel erfolgt derart, dass das Streufahrzeug dem Stabilisierer oder Recycler vorausfährt. Durch den Stabilisierer oder Recycler wird beispielsweise mit Hilfe einer Fräs-/Mischwalze eine obere Schicht einer zu befestigenden Fläche abgefräst, das abgefräste Material wird ggf. mit weiterem Material vermischt und wieder ausgebracht. Das von dem Bindemittelstreuer vor dem Stabilisierer oder Recycler ausgebrachte Bindemittel wird hierbei mit aufgenommen. Nachteilig bei derartigen vorausfahrenden Bindemittelstreuern ist, dass das Bindemittel verweht werden kann. Dies erhöht die Kosten auf Grund des erhöhten Materialbedarfs und führt zu Staubbelastungen für die Arbeiter und Anwohner.

Ferner sind Stabilisierer und Recycler bekannt, die einen Bindemittelsteuer aufweisen. Ein derartiger Stabilisierer oder Recycler mit integriertem Bindemittelstreuer ist bspw. aus DE 10 2009 008 884 bekannt. Hierdurch ist es möglich, das Bindemittel bspw. unmittelbar vor dem Fräs-/Mischrotor auszubringen, sodass das Bindemittel unmittelbar von dem Fräs-/Mischrotor aufgenommen wird. Hierbei besteht die Gefahr des Verwehens nicht. Andererseits weisen derartige Stabilisierer oder Recycler mit integriertem Bindemittelbehälter den Nachteil auf, dass ein derartiger Bindemittelbehälter ein geringes Füllvolumen aufweist und daher regelmäßig befüllt werden muss. Das Befüllen eines derartigen Bindemittelbehälters erfolgt durch ein Silofahrzeug. Aus dem Silofahrzeug wird in regelmäßigen Abständen Bindemittel dem Bindemittelbehälter des Stabilisierers oder Recyclers zugeführt. Das Zuführen erfolgt bspw. pneumatisch. Hierzu wird der Bindemittelbehälter des Silofahrzeugs zur Befüllung unter Druck gesetzt. Ein Befüllen des Behälters des Stabilisierers oder Recyclers während der Fahrt ist nur eingeschränkt möglich.

Aus DE 20 2008 012 104 ist ein Arbeitszug, bestehend aus einem Silofahrzeug und einem Fräsfahrzeug bekannt. Das Fräsfahrzeug weist einen Vorratsbehälter für ein Schüttgut, wie ein Bindemittel auf. Dieser weist ein kleines Volumen auf und wird insofern permanent von dem Silofahrzeug befüllt. Das Silofahrzeug ist hierbei derart aufgebaut, dass nicht der gesamte Bindemittelbehälter des Silofahrzeugs unter Druck gesetzt werden muss. Vielmehr ist in dem Bindemittelbehälter des Silofahrzeugs eine mechanische Transporteinrichtung angeordnet, die das Schüttgut bspw. Mittels einer Förderschnecke in eine Kammer fördert. Aus der Kammer wird das Schüttgut sodann pneumatisch über eine Transportleitung zu dem Vorratsbehälter des Fräsfahrzeugs gefördert. Nachteilig ist hierbei allerdings, dass durch die pneumatische Förderung ein Aufwirbeln des Bindemittels auch in dem Bindemittelbehälter des Silofahrzeugs erfolgt. Dies kann zu einer ungleichmäßigen Zuführung an Bindemittel zu dem Vorratsbehälter des Fräsfahrzeugs führen. Ferner besteht der Nachteil, dass innerhalb des Silofahrzeugs eine erhöhte Staubentwicklung entsteht. Dies führt zu höheren Belastungen der Filteranlagen und kann ferner auch Störungen bei Sensoren, insbesondere innerhalb des Silofahrzeugs angeordneter Füllstandssensoren, hervorrufen. Weiter ist zum Stand der Technik noch auf die US 2012/321421 A1 und die DE 29 39 648 A1 zu verweisen.

Des Weiteren besteht die Problematik, dass das Bindemittel von dem Silofahrzeug zur Bodenbearbeitungsmaschine durch einen, ggf. relativ langen, Schlauch gefördert werden muss. Der Schlauch kann eine Länge von ca. 10m aufweisen. Dies führt dazu, dass ggf. keine ausreichende Menge an Bindemittel zu der Bodenbearbeitungsmaschine, bzw. zu dem Vorrats- bzw. Pufferbehälter der Bodenbearbeitungsmaschine gefördert wird. Dies hängt insbesondere damit zusammen, dass die Fördermenge je nach Art des verwendeten Bindemittels, dessen spezifischem Gewicht, des Alters etc., stark schwankt. Da die Förderung in dem Schlauch üblicherweise pneumatisch erfolgt, besteht hierbei auch die Problematik, dass ggf. ein Teil des Luftstroms in Richtung des Fördersystems, d. h. in Richtung des Silofahrzeugs, abgelenkt wird und somit die Förderung des Bindemittels durch den Schneckenförderer oder dergleichen negativ beeinflusst.

Aufgabe der Erfindung ist es ein Silofahrzeug zur Bereitstellung von Bindemittel zur Bodenstabilisierung für eine Streueinrichtung zu schaffen, mit der eine zuverlässige Bindemittelzufuhr möglich ist sowie einen entsprechenden Arbeitszug zu schaffen. Ferner ist es Aufgabe der Erfindung ein entsprechendes Verfahren zum Fördern von Bindemittel für einen Arbeitszug zu schaffen.

Die Lösung der Aufgabe erfolgt erfindungsgemäß durch ein Silofahrzeug gemäß Anspruch 1, einen Arbeitszug zur Bearbeitung von Böden, wie Straßen, Schienenwegen, Industrieflächen etc. mit einer Bodenbearbeitungsmaschine und einem Silofahrzeug nach Anspruch 12 sowie durch ein Verfahren zum Fördern von Bindemittel für einen Arbeitszug nach Anspruch 14.

Mit Hilfe des Silofahrzeugs erfolgt insbesondere ein Befüllen eines Bindemittelbehälters einer Bodenbearbeitungsmaschine wie eines Stabilisierers oder Recyclers, wie beispielsweise in DE 10 2009 008 884 beschrieben. Das erfindungsgemäße Silofahrzeug zur Bereitstellung von Bindemittel zur Bodenstabilisierung mit einer Streueinrichtung weist einen Vorratsbehälter für das Bindemittel auf. Mit dem Vorratsbehälter ist eine Zwischenkammer verbunden, die sodann mit einer Verdichtungskammer verbunden ist. In der Zwischenkammer ist eine Fördereinrichtung zum Fördern von Bindemittel in die Verdichtungskammer vorgesehen. Mit der Verdichtungskammer ist sodann ein Förderkanal verbunden, bei dem es sich beispielsweise um einen flexiblen Schlauch handelt. Der Förderkanal ist mit der Streueinrichtung verbindbar, wobei die Streueinrichtung vorzugsweise Teil einer Bodenbearbeitungsmaschine ist. Des Weiteren weist das erfindungsgemäße Silofahrzeug eine Pneumatikleitung auf, die mit der Verdichtungskammer und/oder dem Förderkanal verbunden ist, um dem Förderkanal Förder-Druckluft zuzuführen und somit das Bindemittel zu der Streueinrichtung zu fördern. Aufgrund des erfindungsgemäßen Vorsehens einer Verdichtungskammer, die sich an die Zwischenkammer anschließt, ist sichergestellt, dass die Förder-Druckluft nicht oder nur zu einem sehr geringen Teil in die Zwischenkammer strömt. Das verdichtete Bindemittel dient hierbei als eine Art Abdichtung. Insofern wird die Förder-Druckluft vollständig oder zumindest annähernd vollständig zur Förderung des Bindemittels in Richtung der Streueinrichtung genutzt. Ferner wird vermieden, dass durch Eintreten von Förder-Druckluft in die Zwischenkammer das Fördern des Bindemittels in der Zwischenkammer negativ beeinflusst wird.

Vorzugsweise ist die Verdichtungskammer derart ausgebildet, dass sie einen sich in Förderrichtung verjüngenden Querschnitt aufweist. Die Förderrichtung des Bindemittels erfolgt aus der Zwischenkammer in die Verdichtungskammer und von dieser in den Förderkanal. Durch die Querschnittsverjüngung erfolgt bereits automatisch ein Verdichten des Bindemittels, da die in der Zwischenkammer vorgesehene Fördereinrichtung vorzugsweise eine konstante Bindemittelmenge fördert. Zusätzlich kann eine Verdichtungsvorrichtung vorgesehen sein.

Des Weiteren ist es bevorzugt, dass der Förderkanal in seiner Längsrichtung an einem Auslass der Verdichtungskammer zu deren Längsrichtung einen von 0° verschiedenen Winkel aufweist. Der Förderkanal ist in dieser bevorzugten Ausführungsform somit nicht koaxial zur Verdichtungskammer. Hierdurch erfolgt ein zwangsweises Umlenken des Bindemittels. Dies führt zu einem Rückstau und somit zu einem Verdichten des Bindemittels in der Verdichtungskammer. Vorzugsweise ist der Winkel größer als 0°, wobei ein Winkel von 0° als koaxial definiert ist. Bevorzugt ist es, dass der Winkel größer als 50° ist. Besonders bevorzugt ist ein Winkel von 90° oder mehr. Die Verdichtung aufgrund der Umlenkung kann hierbei unabhängig von dem Vorsehen einer Verdichtungskammer mit sich verjüngendem Querschnitt vorgesehen sein. Es ist jedoch auch möglich, diese beiden Ausführungsformen miteinander zu kombinieren.

In einer bevorzugten Weiterbildung der Erfindung ist die Pneumatikleitung derart mit dem Förderkanal verbunden, dass die Förder-Druckluft im Wesentlichen in Längsrichtung des Förderkanals in diesen einströmt. Durch ein derartiges im wesentlichen koaxiales Einströmen der Druckluft, kann eine gute Förderleistung erzielt werden.

Bei der in der Zwischenkammer angeordneten Fördereinrichtung handelt es sich in bevorzugter Ausführungsform um eine mechanische Fördereinrichtung, insbesondere einen Schneckenförderer.

Zur Verdichtung des Bindemittels ist es bevorzugt, in der Zwischenkammer und/oder der Verdichtungskammer eine Verdichtungseinrichtung zum Verdichten des Bindemittels in der Verdichtungskammer anzuordnen. Bevorzugt ist hierbei wiederum eine mechanische Verdichtungseinrichtung, wie eine Verdichtungsschnecke, die ggf. einen gesonderten Antrieb aufweist. Besonders bevorzugt ist es, dass die Verdichtungseinrichtung durch einen Teil der Fördereinrichtung ausgebildet ist. Insbesondere erfolgt die Verdichtung durch einen Endbereich der Fördereinrichtung, wobei der Endbereich, der in Förderrichtung am Ende der Fördereinrichtung angeordnete Bereich ist. Insofern ist es besonders bevorzugt, dass die in der Zwischenkammer angeordnete Fördereinrichtung, bei der es sich in besonders bevorzugter Ausführungsform um einen Schneckenförderer handelt, gleichzeitig auch in deren Endbereich als Verdichtungseinrichtung dient. Vorzugsweise ragt die Fördereinrichtung in die Verdichtungskammer.

Um insbesondere im Endbereich der Fördereinrichtung ein Verdichten des Bindemittels zu bewirken, kann bei einem Schneckenförderer, insbesondere im Endbereich, ein sich verringernder Spindelabstand vorgesehen sein. Durch ein Verringern des Spindelabstandes erfolgt ein Verdichten des Bindemittels. In bevorzugter Weiterbildung kann der Schneckenförderer, insbesondere im Endbereich, derart ausgebildet sein, dass eine Zusatzspindel vorgesehen ist. Insbesondere ist diese Zusatzspindel zwischen der Spindel des Schneckenförderers angeordnet. Hierdurch kann eine zwei- oder auch mehrgängige Spindel ausgebildet werden. Dies führt wiederrum zu einer guten Verdichtung des Bindemittels, insbesondere im Endbereich des Schneckenförderers und insofern insbesondere in der Verdichtungskammer.

Bei einer weiteren bevorzugten Ausführungsform des erfindungsgemäßen Silofahrzeugs ist eine Einlassöffnung der Zwischenkammer, die mittelbar oder unmittelbar mit dem Vorratsbehälter verbunden ist, teilweise mit einem Abdeckelement verschließbar. Insbesondere kann das Abdeckelement in Förderrichtung der in der Zwischenkammer angeordneten Fördereinrichtung in deren Mittel- und/oder Endbereich vorgesehen sein. Hierdurch kann die Menge an Bindemittel, die aus dem Förderbehälter der Zwischenkammer und somit der Fördereinrichtung zugeführt wird, eingestellt werden. Durch Vorsehen eines derartigen Abdeckelements kann in der Zwischenkammer eine Verdichtungskammer ausgebildet werden oder eine sich an die Zwischenkammer anschließende Verdichtungskammer vergrößert werden. Hierdurch kann eine Anpassung der Größe und/oder Ausgestaltung der Verdichtungskammer an das Bindemittel und/oder einen Bindemittelzustand erfolgen. Die Abdeckung kann beispielsweise auch Öffnungen aufweisen, sodass im Bereich der Abdeckung eine geringere Menge an Bindemittel der Zwischenkammer zugeführt wird, bzw. durch die Öffnungen der Abdeckungen hindurch rieselt.

Bei einer weiteren bevorzugten Ausführungsform der Erfindung ist zwischen der Verdichtungskammer und dem Förderkanal ein Verschließelement angeordnet. Mit Hilfe des Verschließelements ist es möglich, den Durchlassquerschnitt bzw. den Querschnitt der Auslassöffnung der Verdichtungskammer zu verändern. Hierdurch kann wiederrum eine Veränderung der Verdichtung in der Verdichtungskammer, bzw. ein Anpassen an das Bindemittel oder den Zustand des Bindemittels erfolgen. Alternativ oder zusätzlich kann das Verschließelement auch zum Lenken des Bindemittelflusses und/oder zum Lenken des Förder-Druckluftstroms dienen. Insbesondere ist das Verschließelement derart ausgebildet, dass es auf einfache Weise ausgetauscht und/oder in seiner Lage, beispielsweise entsprechend eines Schiebers, verändert werden kann.

Erfindungsgemäß ist zwischen der Vorratsbehälter und der Zwischenkammer eine Zusatz-Fördereinrichtung zum Fördern des Bindemittels aus dem Vorratsbehälter in die Zwischenkammer vorgesehen ist. Bei der Zusatz-Fördereinrichtung handelt es sich um eine mechanische Fördereinrichtung.

Das Fördern des Bindemittels kann bspw. durch einen Schneckenförderer oder dergleichen unterstützt werden.

In besonders bevorzugter Ausführungsform handelt es sich bei der mechanischen Zusatz-Fördereinrichtung um einen Zellenradförderer. Dieser weist insbesondere mehrere, um eine Drehachse angeordnete Förderkammern auf. In eine in Richtung des Vorratsbehälters, offene Förderkammer gelangt Bindemittel unter Schwerkraft oder mit Hilfe einer weiteren Fördereinrichtung. Die entsprechende Förderkammer wird sodann durch den Zellenradbeförderer weitergedreht bis das sich in der entsprechenden Kammer befindliche Bindemittel aus dieser, aufgrund der Schwerkraft, in die Zwischenkammer gelangt. Mit Hilfe eines Zellenradförderers ist es insbesondere möglich ein kontinuierliches Fördern von Bindemittel von mehreren um eine Drehachse angeordneten Förderkammern zu realisieren.

Desweiteren betrifft die Erfindung einen Arbeitszug zur Bearbeitung von Böden, bei denen es sich bspw. um Straßen, Schienenwege, Industrieflächen oder dergleichen handelt. Der Arbeitszug weist eine insbesondere selbstfahrende Bodenbearbeitungsmaschine wie ein Stabilisierer oder Recycler auf. Die Bodenbearbeitungsmaschine weist in einem Rotorgehäuse einen Fräs-/Mischrotor auf. Ferner weist die Bodenbearbeitungsmaschine eine Streueinrichtung zum Ausbringen von Bindemittel auf. Die Streueinrichtung ist mit dem Silofahrzeug verbunden, sodass von dem Silofahrzeug der Streueinrichtung Bindemittel, insbesondere während des Betriebs, zugeführt werden kann. Das Silofahrzeug ist hierbei wie vorstehend beschrieben ausgebildet und vorzugsweise vorteilhaft weitergebildet. Vorzugsweise weist die Streueinrichtung einen Pufferbehälter für Bindemittel auf, wobei sodann der Pufferbehälter über die Förderleitung mit dem Silofahrzeug verbunden ist. Der maximale Förderstrom des Bindemittels in der Förderleitung, die mit dem Pufferbehälter der Bodenbearbeitungsmaschine verbunden ist, beträgt vorzugsweise wenigstens 400 kg/min und insbesondere wenigstens 550 kg/min. Die Fördermenge ist insbesondere an die Anforderungen bzw. den Verbrauch anpassbar.

Eine Steuerung der Befüllung des Pufferbehälters erfolgt vorzugsweise ausgehend von der Bodenbearbeitungsmaschine. Dies kann beispielsweise durch entsprechende Füllstandssensoren in dem Pufferbehälter erfolgen. Die Befüllung des Pufferbehälters kann hierbei permanent oder intermittierend erfolgen.

Des Weiteren betrifft die Erfindung ein Verfahren zum Fördern von Bindemittel für einen Arbeitszug mit einer Bodenbearbeitungsmaschine und einem Silofahrzeug. Gemäß des erfindungsgemäßen Verfahren erfolgt ein Fördern von Bindemitteln aus einem Vorratsbehälter des Silofahrzeugs in eine Zwischenkammer. Aus der Zwischenkammer wird das Bindemittel sodann in die Verdichtungskammer gefördert und in dieser verdichtet, wobei das Verdichten, wie vorstehend anhand des Silofahrzeugs beschrieben in vorteilhafter Weise erfolgen kann. Nach dem Verdichten des Bindemittels wird das Bindemittel mit Hilfe von Förder-Druckluft in einen Förderkanal zur Bodenbearbeitungsmaschine gefördert. Das erfindungsgemäße Verfahren ist, insbesondere wie anhand des Silofahrzeugs, des Fördersystems sowie des Arbeitszugs beschrieben, vorteilhaft weitergebildet.

Nachfolgend wird die Erfindung anhand einer bevorzugten Ausführungsform unter Bezugnahme auf die anliegenden Zeichnungen näher erläutert.

Es zeigen:
- Fig. 1:: eine schematische Rückansicht eines Silofahrzeugs,
- Fig. 2:: eine schematische Teil-Schnittansicht eines Silofahrzeugs,
- Fig. 3: eine schematische Seitenansicht einer Bodenbearbeitungsmaschine und
- Fig. 4: eine schematische Schnittansicht einer alternativen Ausführungsform der Erfindung im Bereich des Auslasses der Zwischenkammer.

Das Silofahrzeug weist einen Vorratsbehälter 10 für Bindemittel auf. Der Vorratsbehälter 10 weist an einer Unterseite 12 eine Öffnung 14 auf, die im dargestellten Ausführungsbeispiel über ein Trichterelement 16 mit einer mechanischen Zusatz-Fördereinrichtung 18 verbunden ist, wobei es sich im dargestellten Ausführungsbeispiel bei der Zusatz-Fördereinrichtungen 18 um einen Zellenradförder handelt. Der Zellenradförder 18 ist mit einer Zwischenkammer 20 verbunden.

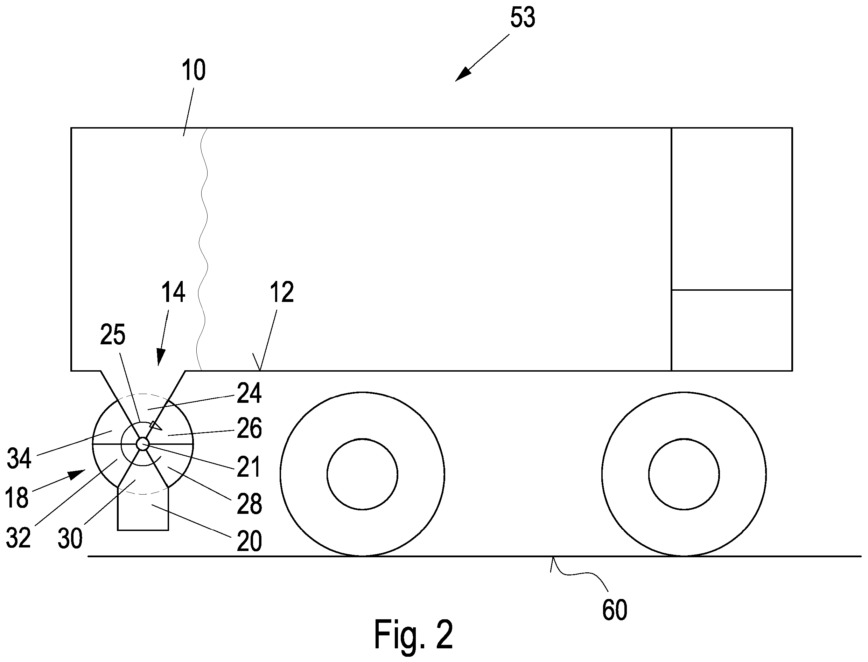

Aus dem Vorratsbehälter 10 gelangt Bindemittel durch die Öffnung 14 in das Trichterelemente 16. Dies erfolgt insbesondere durch Schwerkraft, wobei ggf. zusätzlich in dem Vorratsbehälter 10 eine mechanische Fördereinrichtung, wie ein Schneckenförderer, ein Kratzkettenförderer oder dergleichen vorgesehen sein kann, beispielsweise um das Bindemittel von einem von der Öffnung 14 ferngelegenen Ende des Vorratsbehälters 10 zu der Öffnung 14 zu transportieren. Das Bindemittel rutscht durch die Trichtereinrichtungen 16 in eine obere Förderkammer, die sich in der Position 24 (Fig. 2) des Zellenradförderers 18 befindet. Der Zellenradförderer 18 rotiert um eine Achse 21 in Fig. 2 in Richtung des Pfeils 25. Hierdurch werden nach der Kammer in Position 24 die gerade mit Bindemittel befüllt wird, die Kammern in den Positionen 34 und 32 mit Bindemittel gefüllt. Aus der Förderkammer in Position 30, die der Förderkammer in Position 24 gegenüberliegend angeordnet ist, gelangt das Bindemittel aufgrund der Schwerkraft in die Zwischenkammer 20. Die sich in Rotationsrichtung 25 an die Förderkammer in Position 30 anschließenden beiden Förderkammern in den Positionen 32 und 34, sind leer. Die Förderkammern in den Positionen 26 und 28 sind bereits mit Bindemittel befüllt und werden bei fortschreitender Rotation in Richtung des Pfeils 25 des Zellenförderers 18 nacheinander in die Zwischenkammer 20 entleert.

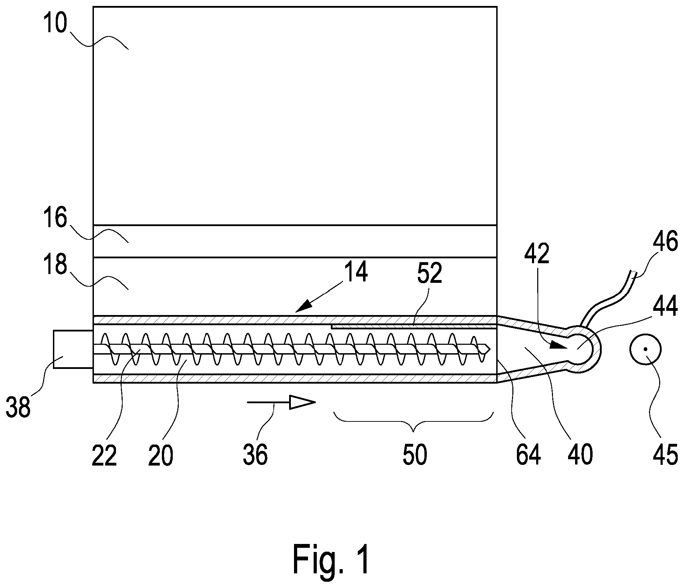

Das von dem Zellenradförderer 18 geförderte Bindemittel gelangt in die Zwischenkammer 20. In dieser ist im dargestellten Ausführungsbeispiel als Fördereinrichtung ein Schneckenförderer 22 vorgesehen, durch den das Bindemittel in Figur 1 von links nach rechts in Förderrichtung 36 gefördert wird. Der Schneckenförderer 22 ist von einem Elektromotor 38 angetrieben. Das von dem Schneckenförderer 22 in Förderrichtung 36 geförderte Bindemittel gelangt in eine sich, an die Förderrichtung anschließende Verdichtungskammer 40. In dem in Figur 1 dargestellten Ausführungsbeispiel ist die Verdichtungskammer derart ausgebildet, dass sie einen sich in Förderrichtung 36 verjüngenden Querschnitt aufweist. Hierdurch erfolgt ein Verdichten des Bindemittels in der Verdichtungskammer 40.

An einen Auslass 42 der Verdichtungskammer 40 schließt sich ein beispielsweise als Schlauch ausgebildeter Förderkanal 44 an. Der Förderkanal 44 verläuft im dargestellten Ausführungsbeispiel zumindest im Bereich des Auslasses 42 senkrecht zur Zeichenebene und somit in einem Winkel von etwa 90° zur Förderrichtung 36. Zum Fördern des Bindemittels in den Förderkanal 44 ist dieser mit einer Pneumatikleitung 46 verbunden. Die Pneumatikleitung 46 ist mit dem Förderkanal 44 im Bereich des Auslasses 42 verbunden, sodass Förder-Druckluft vorzugsweise in Längsrichtung 45 des Förderkanals 44 in diesen einströmt. Aufgrund der Verdichtung des Bindemittels in der Verdichtungskammer 40 ist sichergestellt, dass die Förder-Druckluft nicht und/oder zu einem geringen Teil in Richtung der Zwischenkammer 20 strömt.

Die Fördereinrichtung 22 kann zum Verdichten des Bindemittels in die Verdichtungskammer 40 ragen. Ferner kann die als Schneckenförderer ausgebildete Fördereinrichtung 22 in einem Endbereich 50 derart ausgebildet sein, dass sich der Abstand der Förderspirale verringert und/oder eine zusätzliche Förderspirale vorgesehen ist, sodass die Förderspirale im Endbereich 50 ggf. mehrgängig ist. Eine Öffnung 14 der Zwischenkammer 20 kann insbesondere im Endbereich 50 mit einem Abdeckelement 52 verschlossen sein. Durch Vorsehen eines derartigen Abdeckelements 52 ist es möglich, die Verdichtungskammer 40 zu vergrößern, sodass bereits im Endbereich 50 eine Verdichtung erfolgt und somit zumindest ein Teil des Endbereichs 50 Bestandteil der Verdichtungskammer 40 ist. Das Abdeckelement 52 kann beispielsweise in Förderrichtung 36 verschiebbar oder in Umfangsrichtung verschwenkbar sein, um den Schneckenförderer 22 nur teilweise im Endbereich 50 abzudecken. An Stelle des Verdichtens des Bindemittels durch den Schneckenförderer 22 kann insbesondere im Endbereich 50 oder in der Verdichtungskammer 40 eine Verdichtungseinrichtung zum Verdichten von Bindemittel vorgesehen sein.

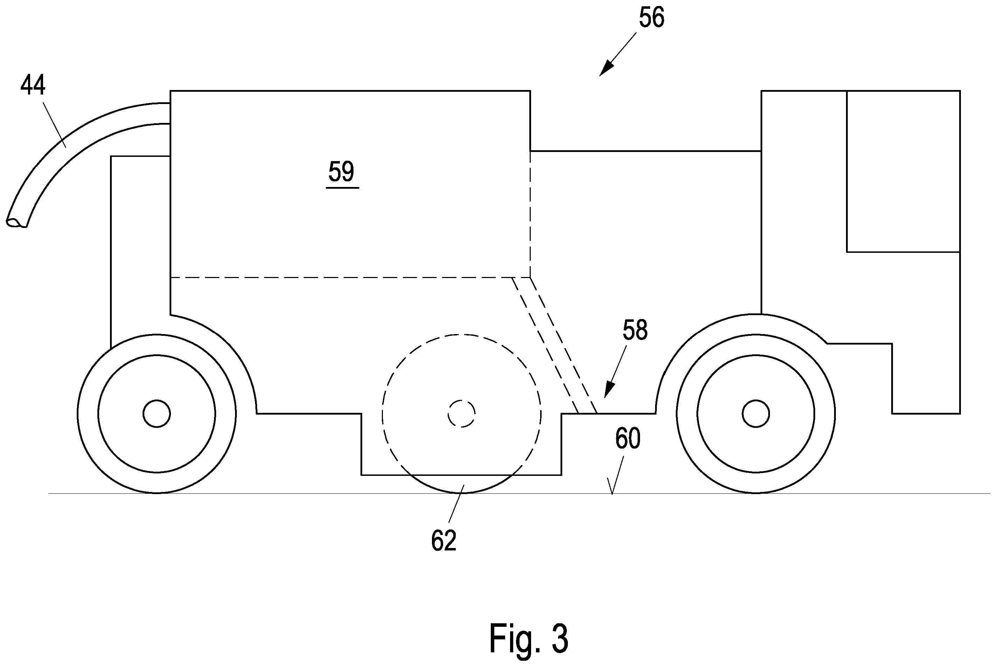

Das in Figur 2 dargestellte Silofahrzeug 53 ist über die Förderleitung 44 mit der in Figur 3 dargestellten Bodenbearbeitungsmaschine 56 verbunden. Die Bodenbearbeitungsmaschine 56 weist den Pufferbehälter 59 auf, der mit der Förderleitung 44 verbunden ist und zum Zwischenpuffern von Bindemittel dient. Mit dem Pufferbehälter 59 ist eine nicht näher dargestellte Streueinrichtung 58 verbunden. Über die Streueinrichtung 58 wird Bindemittel auf eine Oberfläche 60 eines abzufräsenden Bodens gestreut. Die Oberfläche 60 wird sodann mit Hilfe eines Fräs- und Mischrotors 62 abgetragen. Eine derartige Bodenbearbeitungsmaschine mit Pufferbehälter 52 ist beispielsweise in DE 10 2009 008 884 beschrieben.

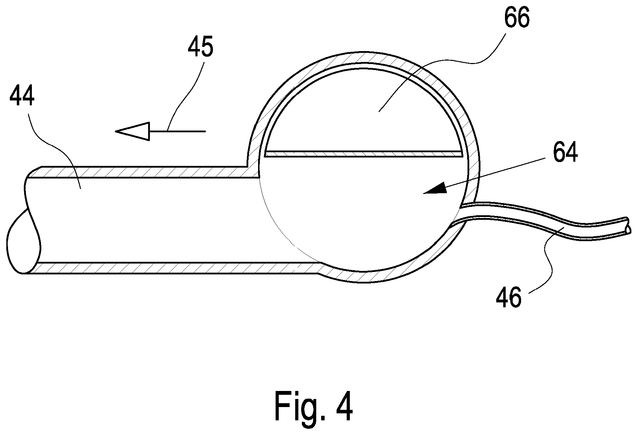

Figur 4 zeigt zu der in Figur 1 dargestellten Ausführungsform der Verdichtungskammer 40 eine Alternative oder zusätzliche Ausführungsform. Beispielsweise im Bereich einer Einlassöffnung 64 der Verdichtungskammer kann ein Verschließelement 66 angeordnet sein. Das Verschließelement 66 verschließt einen Teil des Kanals und bewirkt somit ebenfalls eine Querschnittsverringerung. Dies führt zur Verdichtung des Bindemittels. Das Verschließelement 66 kann hierbei in seiner Anordnung durch Verschieben oder Verdrehen derart ausgebildet sein, dass der Querschnitt veränderbar ist. Auch kann das Verschließelement 66 mehrteilig ausgebildet sein, wobei es beispielsweise durch ein Verschwenken möglich ist, Teile des Verschließelements übereinander anzuordnen, um den Querschnitt zu vergrößern. Ferner kann das Verschließelement 66 in Förderrichtung 36 geneigt sein, sodass ein kontinuierliches Verdichten des Bindemittels erfolgt. Beim Vorsehen des Verschließelements 66 im Bereich der Einlassöffnung 64 entfällt die Verdichtungskammer 40, wie sie in Figur 1 dargestellt ist ggf. Die Verdichtungskammer 40 ist sodann in Förderrichtung 36 vor dem Verschließelement 66 im Endbereich 50 der Zwischenkammer 20 ausgebildet.

Es ist auch möglich die beiden in Figur 1 und Figur 4 dargestellten Ausführungsformen miteinander zu kombinieren. Beispielsweise kann das Verschließelement in Figur 1 im Bereich der Öffnung 42 angeordnet sein. Gegebenenfalls kann die Verjüngung der Verdichtungskammer 40 bei einer Kombination der beiden Ausführungsformen geringer ausfallen.

Je nach Ausgestaltung und Formgebung des Verschließelements 66 kann hierdurch auch ein Lenken des Bindemittelflusses und/oder auch ein Lenken des Förder-Druckluftstroms, der durch die Pneumatikleitung 46 zugeführt wird, erfolgen.

## Patentansprüche

1. Silofahrzeug zur Bereitstellung von Bindemittel zur Bodenstabilisierung für eine Streueinrichtung (58), mit
einem Vorratsbehälter (10) für das Bindemittel,
einer mit dem Vorratsbehälter (10) verbundenen Zwischenkammer (20),
einer mit der Zwischenkammer (20) verbundenen Verdichtungskammer (40),
einer in der Zwischenkammer (20) angeordneten Fördereinrichtung (22) zum Fördern von Bindemitteln in die Verdichtungskammer (40), wobei die Fördereinrichtung (22) derart ausgebildet ist, dass insbesondere in Förderrichtung (36) in einem Endbereich (50) der Fördereinrichtung (22) ein Verdichten des Bindemittels erfolgt
einem mit der Verdichtungskammer (40) verbundenen Förderkanal (44), der mit der Streueinrichtung (58) verbindbar ist
einer mit der Verdichtungskammer (40) und/oder dem Förderkanal (44) verbundenen Pneumatikleitung (46) zum Zuführen von Förder-Druckluft **dadurch gekennzeichnet, dass** zwischen dem Vorratsbehälter (10) und der Zwischenkammer (20) eine mechanische Zusatz-Fördereinrichtung (18) zum Fördern von Bindemitteln aus dem Vorratsbehälter (10) in die Zwischenkammer (20) vorgesehen ist.

2. Silofahrzeug nach Anspruch 1, **dadurch gekennzeichnet, dass** die Verdichtungskammer einen sich in Förderrichtung verjüngenden Querschnitt aufweist.

3. Silofahrzeug nach einem der Ansprüche 1 oder 2, **dadurch gekennzeichnet, dass** eine Längsrichtung (45) des Förderkanals (44) an einem Auslass (42) der Verdichtungskammer (40) zur Längsrichtung (36) der Verdichtungskammer (40) einen von 0° verschiedenen Winkel, insbesondere einen Winkel von mehr als 50° und besonders bevorzugt gleich oder mehr als 90°, aufweist.

4. Silofahrzeug nach einem der Ansprüche 1 bis 3, **dadurch gekennzeichnet, dass** die Pneumatikleitung (46) derart mit dem Förderkanal (44) verbunden ist, dass die Förder-Druckluft im Wesentlichen in Längsrichtung (45) des Förderkanals (44) in diesen einströmt.

5. Silofahrzeug nach einem der Ansprüche 1 bis 4, **dadurch gekennzeichnet, dass** in der Zwischenkammer (20) und/oder der Verdichtungskammer (40) eine Verdichtungseinrichtung zum Verdichten von Bindemittel in der Verdichtungskammer (40) angeordnete ist.

6. Silofahrzeug nach Anspruch 5, **dadurch gekennzeichnet, dass** die Verdichtungseinrichtung durch einen Teil der Fördereinrichtung (22), insbesondere einen in Förderrichtung (36) angeordneten Endbereich (50) der Fördereinrichtung (22) ausgebildet ist.

7. Silofahrzeug nach einem der Ansprüche 1 bis 6, **dadurch gekennzeichnet, dass** die Fördereinrichtung (22) in die Verdichtungskammer (40) ragt

8. Silofahrzeug nach einem der Ansprüche 1 bis 7, **dadurch gekennzeichnet, dass** eine Einlassöffnung (14) der Zwischenkammer (20), die zumindest mittelbar mit dem Vorratsbehälter (10) verbunden ist, teilweise mit einem Abdeckelement (52) verschließbar ist, wobei das Abdeckelement vorzugsweise im Endbereich der Fördereinrichtung angeordnet ist.

9. Silofahrzeug nach einem der Ansprüche 1 bis 8, **dadurch gekennzeichnet, dass** zwischen der Verdichtungskammer (40) und dem Förderkanal (44) ein Verschließelement (66) zum Verändern eines Durchlassquerschnitts und/oder zum lenken des Bindemittelflusses und/oder zum lenken des Förder-Druckluftstroms angeordnet ist.

10. Silofahrzeug nach einem der Ansprüche 1 bis 9, **dadurch gekennzeichnet, dass** die Zusatz-Fördereinrichtung (18), insbesondere Förderkammern aufweist und insbesondere als Zellenradförderer ausgebildet ist.

11. Silofahrzeug nach einem der Ansprüche 1 bis 10, **dadurch gekennzeichnet, dass** die Fördereinrichtung (22) als Schneckenförderer, ausgebildet ist, der insbesondere im Endbereich (50), einen sich in Förderrichtung (36) verringernden Spindelabstand und/oder eine Zusatzspindel aufweist, die insbesondere zwischen der Spindel des Schneckenförderers angeordnet ist.

12. Arbeitszug zur Bearbeitung von Böden, mit
einer selbstfahrenden Bodenbearbeitungsmaschine (56) mit einem in einem Rotorgehäuse angeordneten Fräs-/Mischmotor (62) und einer Streueinrichtung (58) zum Ausbringen von Bindemittel und
einem Silofahrzeug (53) nach einem der Ansprüche 1 bis 11 zum Zuführen von Bindemittelen zur Streueinrichtung (58).

13. Arbeitszug nach Anspruch 12, **dadurch gekennzeichnet, dass** die Streueinrichtung (58) einen Pufferbehälter (54) für Bindemittel aufweist, der mit der Förderleitung (44) des Silofahrzeugs (53) verbunden ist.

14. Verfahren zum Fördern von Bindemittel mit einem Arbeitszug mit einer Bodenbearbeitungsmaschine (56) und einem Silofahrzeug (53) nach einem der Ansprüche 1 bis 11, mit den Schritten:
Fördern des Bindemittels aus dem Vorratsbehälter (10) in die Zwischenkammer (20) mittels der mechanischen Zusatz-Fördereinrichtung (18),
Fördern des Bindemittels von der Zwischenkammer (20) in die Verdichtungskammer (40) mittels der in die Zwischenkammer (20) angeordneten Fördereinrichtung (22),
Verdichten des Bindemittels in der Verdichtungskammer (40) mittels der Fördereinrichtung (22), die derart ausgebildet ist, dass insbesondere in Förderrichtung (36) in einem Endbereich (50) der Fördereinrichtung (22) ein Verdichten des Bindemittels erfolgt und
Fördern des Bindemittels von der Verdichtungskammer (40) zu der Bodenbearbeitungsmaschine (56).

## Claims

1. A silo vehicle for the provision of binding agents for soil stabilization for a spreading device (58), comprising
a storage container (10) for the binding agent,
an intermediate chamber (20) connected to the storage container (10),
a compression chamber (40) connected to the intermediate chamber (20),
a conveying device (22) arranged in the intermediate chamber (20) for conveying binding agents into the compression chamber (40), the conveying device (22) being designed in such a manner that the binding agent is compressed in particular in conveying direction (36) in an end region (50) of the conveying device (22),
a conveying channel (44) connected to the compression chamber (40) and connectable to the spreading device (58),
a pneumatic line (46) connected to the compression chamber (40) and/or the conveying channel (44) for feeding of conveying compressed air,
**characterized in that**
a mechanical additional conveying device (18) is provided between the storage container (10) and the intermediate chamber (20) for conveying binding agents from the storage container (10) into the intermediate chamber (20),

2. The silo vehicle of claim 1, **characterized in that** the compression chamber comprises a cross-section being tapered in conveying direction.

3. The silo vehicle of one of claims 1 or 2, **characterized in that** a longitudinal direction (45) of the conveying channel (44) comprises at an outlet (42) of the compression chamber (40) towards the longitudinal direction (36) of the compression chamber (40) an angle being different than 0°, in particular an angle of more than 50° and particularly preferred equal to or larger than 90°.

4. The silo vehicle of one of claims 1 to 3, **characterized in that** the pneumatic line (46) is connected to the conveying channel (44) in such a manner that the conveying compressed air flows into the conveying channel (44) substantially in longitudinal direction (45) thereof.

5. The silo vehicle of one of claims 1 to 4, **characterized in that** a compression device for compressing of binding agent in the compression chamber (40) is arranged in the intermediate chamber (20) and/or the compression chamber (40).

6. The silo vehicle of claim 5, **characterized in that** the compression device is formed by a part of the conveying device (22), in particular by an end region (50) of the conveying device (22) arranged in conveying direction (36).

7. The silo vehicle of one of claims 1 to 6, **characterized in that** the conveying device (22) protrudes into the compression chamber (40).

8. The silo vehicle of one of claims 1 to 7, **characterized in that** an inlet opening (14) of the intermediate chamber (20), which is at least indirectly connected to the storage container (10), is adapted to be partially closed with the cover element (52), wherein the cover element is preferably arranged in the end region of the conveying device.

9. The silo vehicle of one of claims 1 to 8, **characterized in that** a closing element (66) is arranged between the compression chamber (40) and the conveying channel (44) for modifying a passage cross-section and/or for directing the binding agent flow and/or for directing the conveying compressed air flow.

10. The silo vehicle of one of claims 1 to 9, **characterized in that** the additional conveying device (18) in particular comprises conveying chambers and is in particular designed as a rotary feeder.

11. The silo vehicle of one of claims 1 to 10, **characterized in that** the conveyor device (22) is designed as a screw conveyor which comprises, in particular in the end region (50), a spindle distance reducing in conveying direction (36) and/or an additional spindle being arranged in particular between the spindle of the screw conveyor.

12. A work train for working soils, comprising
a self-propelled ground working machine (56) with a milling/mixing motor (62) arranged inside a rotor housing and a spreading device (58) for spreading of binding agent, and
a silo vehicle (53) of one of claims 1 to 11 for feeding binding agents to the spreading device (58).

13. The work train of claim 12, **characterized in that** the spreading device (58) comprises a buffer container (54) for binding agent which is connected to the conveying line (44) of the silo vehicle (53).

14. A method for conveying of binding agent with a work train having a ground working machine (56) and a silo vehicle (53) of one of claims 1 to 11, comprising the following steps:
conveying the binding agent from the storage container (10) into the intermediate chamber (20) using the mechanical additional conveying device (18),
conveying the binding agent from the intermediate chamber (20) into the compression chamber (40) using the conveying device (22) arranged in the intermediate chamber (20),
compressing the binding agent in the compression chamber (40) using the conveying device (22), which is designed such that the binding agent is compressed in particular in conveying direction (36) in an end region (50) of the conveying device (22), and
conveying the binding agent from the compression chamber (40) to the ground working machine (56).

## Revendications

1. Véhicule-silo pour la fourniture d'un liant pour la stabilisation du sol pour un dispositif d'épandage (58), avec un réservoir (10) pour le liant,
une chambre intermédiaire (20) reliée au réservoir (10),
une chambre de compactage (40) reliée à la chambre intermédiaire (20),
un dispositif de transport (22) disposé dans la chambre intermédiaire (20) pour le transport de liant dans la chambre de compactage (40), dans lequel le dispositif de transport (22) est réalisé de telle sorte qu'un compactage du liant se produise en particulier dans la direction de transport (36) dans une zone d'extrémité (50) du dispositif de transport (22)
un canal de transport (44) relié à la chambre de compactage (40), qui peut être relié au dispositif d'épandage (58)
une conduite pneumatique (46) reliée à la chambre de compactage (40) et/ou au canal de transport (44) pour l'amenée d'air comprimé de transport
**caractérisé en ce que**
un dispositif de transport supplémentaire (18) mécanique est prévu entre le réservoir (10) et la chambre intermédiaire (20) pour le transport de liant du réservoir (10) dans la chambre intermédiaire (20).

2. Véhicule-silo selon la revendication 1, **caractérisé en ce que** la chambre de compactage présente une section transversale se rétrécissant dans la direction de transport.

3. Véhicule-silo selon l'une quelconque des revendications 1 ou 2, **caractérisé en ce qu'**une direction longitudinale (45) du canal de transport (44) présente un angle différent de 0°, en particulier un angle supérieur à 50° et de manière particulièrement préférée supérieur ou égal à 90°, au niveau d'une sortie (42) de la chambre de compactage (40) par rapport à la direction longitudinale (36) de la chambre de compactage (40).

4. Véhicule-silo selon l'une quelconque des revendications 1 à 3, **caractérisé en ce que** la conduite pneumatique (46) est reliée au canal de transport (44) de sorte que l'air comprimé de transport afflue dans celui-ci sensiblement dans la direction longitudinale (45) du canal de transport (44).

5. Véhicule-silo selon l'une quelconque des revendications 1 à 4, **caractérisé en ce qu'**un dispositif de compactage pour le compactage de liant dans la chambre de compactage (40) est disposé dans la chambre intermédiaire (20) et/ou la chambre de compactage (40).

6. Véhicule-silo selon la revendication 5, **caractérisé en ce que** le dispositif de compactage est réalisé par une partie du dispositif de transport (22), en particulier une zone d'extrémité (50) du dispositif de transport (22) disposée dans la direction de transport (36).

7. Véhicule-silo selon l'une quelconque des revendications 1 à 6, **caractérisé en ce que** le dispositif de transport (22) fait saillie dans la chambre de compactage (40).

8. Véhicule-silo selon l'une quelconque des revendications 1 à 7, **caractérisé en ce qu'**une ouverture d'entrée (14) de la chambre intermédiaire (20), qui est reliée au moins indirectement au réservoir (10), peut être partiellement fermée avec un élément de recouvrement (52), dans lequel l'élément de recouvrement est disposé de préférence dans la zone d'extrémité du dispositif de transport.

9. Véhicule-silo selon l'une quelconque des revendications 1 à 8, **caractérisé en ce qu'**un élément de fermeture (66) est disposé entre la chambre de compactage (40) et le canal de transport (44) pour modifier une section de passage et/ou pour diriger le flux de liant et/ou pour diriger le flux d'air comprimé de transport.

10. Véhicule-silo selon l'une quelconque des revendications 1 à 9, **caractérisé en ce que** le dispositif de transport supplémentaire (18) présente en particulier des chambres de transport et est en particulier réalisé en tant que convoyeur à roue à alvéoles.

11. Véhicule-silo selon l'une quelconque des revendications 1 à 10, **caractérisé en ce que** le dispositif de transport (22) est réalisé en tant que convoyeur à vis sans fin, qui présente en particulier dans la zone d'extrémité (50) un écartement de broche diminuant dans la direction de transport (36) et/ou une broche supplémentaire, qui est en particulier disposée entre la broche du convoyeur à vis sans fin.

12. Train de travail pour le travail de sols, avec
une machine de travail du sol autopropulsée (56) avec un moteur de fraisage/mélange (62) disposé dans un carter de rotor et un dispositif d'épandage (58) pour la distribution de liant et
un véhicule-silo (53) selon l'une quelconque des revendications 1 à 11 pour amener des liants au dispositif d'épandage (58).

13. Train de travail selon la revendication 12, **caractérisé en ce que** le dispositif d'épandage (58) présente un réservoir tampon (54) pour liant, qui est relié à la conduite de transport (44) du véhicule-silo (53).

14. Procédé de transport de liant avec un train de travail avec une machine de travail du sol (56) et un véhicule-silo (53) selon l'une quelconque des revendications 1 à 11, avec les étapes de :
transport du liant depuis le réservoir (10) dans la chambre intermédiaire (20) au moyen du dispositif de transport supplémentaire (18) mécanique, transport du liant depuis la chambre intermédiaire (20) dans la chambre de compactage (40) au moyen du dispositif de transport (22) disposé dans la chambre intermédiaire (20),
compactage du liant dans la chambre de compactage (40) au moyen du dispositif de transport (22), qui est réalisé de telle sorte qu'un compactage du liant se produise en particulier dans la direction de transport (36) dans une zone d'extrémité (50) du dispositif de transport (22) et
transport du liant de la chambre de compactage (40) vers la machine de traitement du sol (56).
